# EUROPÄISCHE PATENTSCHRIFT

(11) **EP 2 209 722 B1**
(45) Veröffentlichungstag und Bekanntmachung des Hinweises auf die Patenterteilung: **06.12.2017**
(21) Anmeldenummer: 08848153.6
(22) Anmeldetag: 07.11.2008
(51) Int. Cl.: B65D 41/04, B65D 43/02, C09K 3/10

(54) **VERFAHREN ZUR HERSTELLUNG EINES GEFÄSSVERSCHLUSSES**
METHOD FOR PRODUCING A VESSEL CLOSURE
PROCÉDÉ DE PRODUCTION D'UNE FERMETURE DE RÉCIPIENT

(30) Priorität: 09.11.2007 EP 07021782; 08.02.2008 EP 08002379
(43) Veröffentlichungstag der Anmeldung: 28.07.2010
(60) Teilanmeldung: 10006004.5
(73) Patentinhaber: ACTEGA DS GmbH, 28219 Bremen (DE)
(72) Erfinder: POEL-ASENDORF, Christiane, 28844 Weyhe (DE); WITTENBERG, Rüdiger, 28215 Bremen (DE); SCHLENK, Georg, 27793 Wildeshausen (DE)
(74) Vertreter: Maiwald, Walter
(86) Internationale Anmeldenummer: PCT/EP2008/009421
(87) Internationale Veröffentlichungsnummer: WO 2009/059788

(56) Entgegenhaltungen:
- WO-A-96/20878
- DE-A1- 4 329 948
- US-A- 5 686 040
- US-A1- 2006 199 911
- US-B1- 6 235 822

## Beschreibung

Die Erfindung betrifft ein Verfahren zur Herstellung eines Nockendrehverschlusses für Gefäße mit einer durch den Gefäßverschluss zu verschließenden Öffnung mit einem Innendurchmesser von mindestens 3,5 cm, wobei der Gefäßverschluss ein PVC-freies Dichtungselement auf Polymerbasis umfasst, welches im Gefäßverschluss so angeordnet ist, dass es im Schließzustand dichtend an der Öffnung des Gefäßes anliegt.

Während die Industrie für die Dichtungseinlagen von Kronkorken oder Flaschenschraubverschlüssen seit längerem PVC-freie Compounds verwendet, werden für Nockendrehverschlüsse, die als Gefäßverschlüsse für Gefäße mit einem größeren Innendurchmesser der Öffnung dienen, nach wie vor PVC-haltige Compounds eingesetzt. Üblicherweise werden solche PVC-haltigen Compounds bei Raumtemperatur in flüssiger Form, aus weichmacherhaltigen Systemen aufgetragen.

Es ist jedoch unerwünscht, PVC-haltige Compounds einzusetzen. Bei der üblichen Verbrennung von Haushaltsabfall entstehen aus Halogenkunststoffen säurehaltige Gase, deren Entweichen in die Atmosphäre schädlich ist. Außerdem erfordern solche PVC-basierenden Dichtungselemente den Einsatz von Weichmachern, die aus gesundheitlichen Gründen ebenfalls bedenklich sein können.

Es besteht daher ein Bedarf für Nockendrehverschlüsse, die ein Dichtungselement auf Polymerbasis aufweisen, welches aber nicht auf PVC basiert, und die sich für Gefäße mit relativ großen Öffnungen, mindestens von 3,5 cm Innendurchmesser, eignen.

Es ist eine wesentliche Aufgabe der Erfindung, ein Verfahren zur Herstellung solcher Nockendrehverschlüsse anzugeben, welches es ermöglicht, den Gefäßverschluss mit einem Dichtungselement auf Polymerbasis zu versehen, welches kein PVC enthält.

Grundsätzlich werden erfindungsgemäß Nockendrehverschlüsse für solche Gefäße bereitgestellt, deren durch den Gefäßverschluss zu verschließende Öffnung einen Innendurchmesser von mindestens 3,5 cm aufweist. Das entspricht einem Innendurchmesser, der größer ist als jener, den übliche Getränkeflaschen aufweisen, die mit Kronkorken, Schraubkappen und dergleichen in bekannter Weise verschlossen werden, wie beispielsweise in der EP-B1 0 503 124 beschrieben.

Besonders eignet sich die Erfindung für die Herstellung von relativ großen Gefäßverschlüssen, also für Gefäßöffnungen mit einem Innendurchmesser von mehr als3,5 cm bis herauf zu solchen, bei denen der Innendurchmesser der zu verschließenden Öffnung größer als 4 cm ist.

Solche Gefäßverschlüsse eignen sich als Schraubdeckel für Flaschen, wie beispielsweise Saft- oder Milchflaschen, für Konservengläser, Marmeladengläser und dergleichen.

Die Erfindung löst diese Aufgabe mittels der in Anspruch 1 definierten Merkmalskombination.

Obwohl für kleine Verschlussdurchmesser (Kronkorken, Schraubkappen) seit Jahrzehnten z. B. das als "SACMI-Verfahren" bekannte Prinzip eingesetzt wird, bei dem ein Polymercompound extrudiert und im Verschlussrohling durch Stempeln zur fertigen Dichtungseinlage geformt wird, hat die Industrie per dato für größere Verschlussdurchmesser (mindestens 3,5 cm) keine Lösung gefunden, die es ermöglicht, auf PVC-basierende Plastisole und dergleichen zu verzichten.

Die Erfindung überwindet dieses Vorurteil durch den Vorschlag, Dichtungseinlagen wie in Anspruch 1 definiert für solche größere Verschlussdurchmesser durch Extrusion und nachfolgende Formgebung des Dichtungsmaterials zu erzeugen.

Die Anforderungen an die Dichtungs-Materialien bei Gefäßverschlüssen für größere Innendurchmesser der Gefäßöffnung sind anspruchsvoll. Für solche Einsatzzwecke kommt es besonders darauf an, eine ausreichende Fließfähigkeit des Polymermaterials bei der Herstellung des Dichtungselementes zu verbinden mit ausreichenden Dichtungseigenschaften im verschlossenen Zustand; hierzu gehört auch die heute erforderliche Dichtigkeit gegenüber dem Eindringen bzw. dem Entweichen von Gasen, gegebenenfalls kombiniert mit einer Überdruckventilwirkung, die das Platzen des Gefäßes beim Erwärmen oder bei der Entwicklung von Überdruck im Gefäß aus anderen Gründen verhindert. Zudem wird aber gerade für die typischen Einsatzzwecke von Gefäßen mit größeren Öffnungsdurchmessern (beispielsweise Konserven) verlangt, dass das Dichtungselement auch unter Sterilisierungsbedingungen einsetzbar ist.

Herkömmliche Gefäßverschlüsse mit PVC-haltigen Dichtungselementen sind z.B. in DE 43 299 48 A1 offenbart.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen zwar den dort genannten Behandlungen wie Pasteurisierung und Heißfüllung standhalten können, jedoch sind das thermisch weitaus weniger anspruchsvolle Verfahren als die Sterilisierung. Bei Pasteurisierung und Heißfüllung werden Temperaturen unterhalb 100°C eingesetzt; typische Sterilisierungsbedingungen sind 121°C oder sogar 132°C. Die erfindungsgemäß zu verwendenden Polymermaterialien sind in der Art maßgeschneidert, dass sie einerseits .während des Pasteurisations- und Heißfüllprozesses und andererseits im Sterilisationsprozess ihre Dichtungswirkung im nötigen Umfang beibehalten.

Außerdem lassen sich nicht alle Compounds der in EP 0 503 124 beschriebenen Art ohne weiteres für größere Verschlüsse einsetzen. Obwohl in EP 0 503 124 angegeben ist, dass sich die dort beschriebenen Compounds auch für Schraubdeckel und dergleichen eignen, ist dies oft nur der Fall, wenn die Verarbeitungseigenschaften entsprechend abgewandelt werden - insbesondere durch den Zusatz von Strecköl, um die Fließfähigkeit zu verbessern. Das ist nicht immer erwünscht, z. B. im Hinblick auf die Gefahr der Migration von Compound-Bestandteilen in fetthaltige Nahrungsmittel.

Aus WO 96/20887 sind Gefäßverschlüsse bekannt, deren Dichtungseinlage kein PVC enthält. Das Material der Dichtungseinlage basiert auf Gemischen von Ethylen-Octen Copolymeren und Ethylen-Acrylsäure-Copolymeren. Angaben zur Shore A-Härte und zum Druckverformungsrest (DVR) werden nicht gemacht.

Aus US 6,235,822 sind ähnliche Gefäßverschlüsse bekannt. Auch hier finden sich keine Daten zur Shore A-Härte und zum DVR des Dichtungsmaterials.

US 5,686,040 offenbart die Herstellung von PVC-freien Dichtungseinlagen, nennt aber keine Rezepturen, keine Shore A-Härten und keine Werte für den DVR.

US 2006/199911 offenbart die Verwendung von Block-Copolymeren von Ethylen und Octen für Dichtungen, einschließlich solcher für Gefäßverschlüsse. Dabei kann PVC mit verwendet werden und der Gehalt an Weißöl kann sehr hoch sein.

Die Dichtungselemente von Gefäßverschlüssen sind dabei stets geschäumt. Angaben zum DVR solcher Dichtungselemente werden nicht gemacht.

Besonders problematisch ist in diesem Kontext die Herstellung von Nockendrehverschlüssen, die typischerweise als Verschlüsse für Schraubdeckelgläser verwendet werden. Wenn das Material der Dichtungseinlage, wie herkömmlich, auf PVC basiert und als weichmacherhaltiges, dünnflüssiges Plastisol in den Verschlussrohling eingetragen wird (bei Rotation des Rohlings unter der Abgabedüse), verteilt es sich ohne Probleme im Innenrandbereich und härtet dort nach Erhitzen für typischerweise 60 Sekunden bei 200°C zu einer gleichmäßigen Dichtungsschicht gewünschter Dicke aus. So bildet sich die Dichtungseinlage unproblematisch auch im Bereich der inneren Hauptfläche des Verschlusses, der von den einwärts vorstehenden Nocken verdeckt ist.

Das ist jedoch nicht mehr der Fall, wenn ein Material zur Erzeugung der Dichtungseinlage verwendet wird, das diese Dünnflüssigkeit nicht aufweist.

PVC-freie Materialien, die keine Weichmacher aufweisen, müssen in thermisch ausreichend erweichter Form aufgetragen werden. Durch Rotation des Rohlings und Einspritzen des Materials, wie bei PVC-Plastisolen, lässt sich eine solche Dichtung nicht erzeugen. Dies erfordert vielmehr beispielsweise Extrusion und entsprechende Formgebung. Dabei stören die Nocken eines Nockendrehverschlusses, weil sie das Einbringen eines entsprechenden Werkzeuges unmöglich machen.

Grundsätzlich wird gemäß dem erfindungsgemäßen Herstellungsverfahren von einem Gefäßverschluss-Rohling aus Metall oder Kunststoff ausgegangen, der vorzugsweise zunächst auf seiner Innenseite mit einem geeigneten Primer vorbehandelt wird.
Insbesondere eignet sich hierfür ein TPE-Lack, etwa der von der Firma Rhenania entwickelte Primer-Lack, auf dem die erfindungsgemäß am meisten bevorzugten Compounds besonders gut haften.

Alternativ dazu kann man eine geeignete Primerbeschichtung durch Laminierung, Kaschierung oder eventuell auch durch Co-Extrusion aufbringen.

Auf den so vorbehandelten Rohling wird innenseitig das Polymermaterial, das die Dichtung bilden soll, in thermisch fließfähig gemachter Form aufgetragen. Insbesondere eignet sich hierfür eine Extrusion, bei welcher das Dichtungscompound im Temperaturbereich zwischen 100°C und 260°C vorgelegt wird.

Geeignete Auftragsmengen richten sich nach dem Durchmesser des Verschlusses. Typischerweise (aber natürlich nicht zwingend) liegt beispielsweise für einen Nockendrehverschluss mit einem Innendurchmesser von 66 mm und eine scheibenförmige Dichtungseinlage die Auftragsmenge im Bereich zwischen 1 und 2 g, insbesondere bei etwa 1,4 g.

Die Extrusion kann etwa in die Mitte der Rohling-Innenfläche erfolgen, wenn die Dichtungseinlage kreisscheibenförmig ausgebildet sein soll.

Nachfolgend wird das kreisschreibenförmige Dichtungselement aus dem extrudierten, noch fließfähigen Material durch entsprechende Stempelung (analog dem bekannten SACMI-Verfahren) geformt.

Alternativ dazu kann das Dichtungselement ringförmig nur in dem Bereich ausgebildet sein, der später an der Mündung des zu verschließenden Gefäßes anliegt. Dieser Ring kann in den Verschluss eingestempelt werden.

Für eine solche Auftragung eignet sich beispielsweise grundsätzlich das Verfahren, das in US 5,763,004 geschrieben worden ist. Hierbei wird ein ringförmiger Auftrag mittels einer entsprechenden ringförmigen Anordnung von Auftragungsdüsen bewirkt. Hieran kann sich ein geeigneter Formgebungsschritt durch Stempelung oder dergleichen anschließen.

Die Ausbildung des ringförmigen Dichtungselements kann alternativ dadurch erfolgen, dass zunächst ein Strang des entsprechenden Materials extrudiert wird. Dicke und Länge des Stranges werden so gewählt, dass der kreisförmig geschlossene Strang der Form des gewünschten Dichtungselements entspricht, wenn er durch entsprechende Stempelung verformt worden ist.

Der Strang wird kreisförmig geschlossen und mit einem geeigneten Werkzeug aufgenommen, um unter Erwärmung in den Verschluss-Rohling eingelegt zu werden. Nach seiner Einbringung wird der Strang durch Stempelung in die gewünschte Form des Dichtungselements gebracht.

Sowohl das Aufnahmewerkzeug als auch das Stempelungswerkzeug kann dabei so schmal geformt sein, dass die Nocken des Rohlings die Einbringung und Stempelung des Materials nicht behindern.

Das erfindungsgemäße Verfahren hat, wie ersichtlich, gegenüber dem bekannten Plastisol-Verfahren den weiteren Vorteil, dass die Dichtungseinlage durch die Formgebung (stempeln) bereits völlig fertig gestellt ist und nicht, wie beim Einspritzen von Plastisol, eine anschließende Aushärtung im Ofen erforderlich ist.

Die hier angegebenen Vorgehensweise eignet sich grundsätzlich für sämtliche Gefäßverschluss-Rohlinge, deren Innenseite unproblematisch zugänglich ist.

Wenn das entsprechend ausgeformte Dichtungselement kreisscheibenförmig ist, wird man vorzugsweise im Mittelbereich des Verschlusses, der keine Dichtungswirkung hat, weil er innerhalb der Gefäßmündung liegt, eine Dicke von etwa 0,1 - 0,2 mm für das Dichtungselement vorsehen.

Wenn der Gefäßverschluss völlig eben ist, wird das Dichtungselement daher auch in seinem Dichtungsbereich eine entsprechende Dicke haben.

Hat der Gefäßverschluss hingegen in dem Bereich, der der Mündung des zu verschließenden Gefäßes entspricht, eine Vertiefung ("Kanal"), so wie dies bei Verschlüssen mit PVC-basierenden Plastisol-Dichtungen regelmäßig der Fall ist, dann wird das Dichtungselement in diesem Bereich eventuell dicker sein. Wegen der größeren Elastizität eines dickeren Dichtungselementes kann das von Vorteil sein. In solchen Fällen ist das Dichtungselement in seinem dichtenden Bereich oft vorzugsweise etwa 1 mm dick.

Man kann im Bereich des Dichtungselementes, der dichtend mit der Gefäßmündung in Kontakt kommt, auch eine aufwändigere Formgebung vorsehen und insbesondere eine oder mehrere Dichtungslippen ausformen. Das kann durch entsprechende Formgebung beim Verstempeln des Extrudats geschehen. Im Bereich solcher Dichtungslippen kann das Dichtungselement dann eine entsprechend größere Dicke aufweisen und beispielsweise bis zu 3 mm dick sein.

Problematischer erscheint die Ausbildung entsprechender Dichtungselemente zunächst bei solchen Gefäßverschlüssen, deren Innenfläche nicht frei zugänglich ist. Ein typisches Beispiel sind Nockendrehverschlüsse, bei denen die Nocken, beim Blick auf die Innenseite des Verschlusses, den Dichtungsbereich teilweise überdecken und es unmöglich machen, einen Stempel oder dergleichen einzuführen, der im von den Nocken verdeckten Bereich das Dichtungselement ausformen kann.

Hier schafft eine Ausführungsform des Verfahrens Abhilfe, die nun unter Bezugnahme auf die beigefügten Zeichnungen näher beschrieben werden soll.

Darin zeigen:
- Figur 1: einen herkömmlichen Nockendrehverschluss,
- Figur 2: eine erste Ausführungsform des Verfahrens und
- Figur 3: eine zweite Ausführungsformdes Verfahrens.

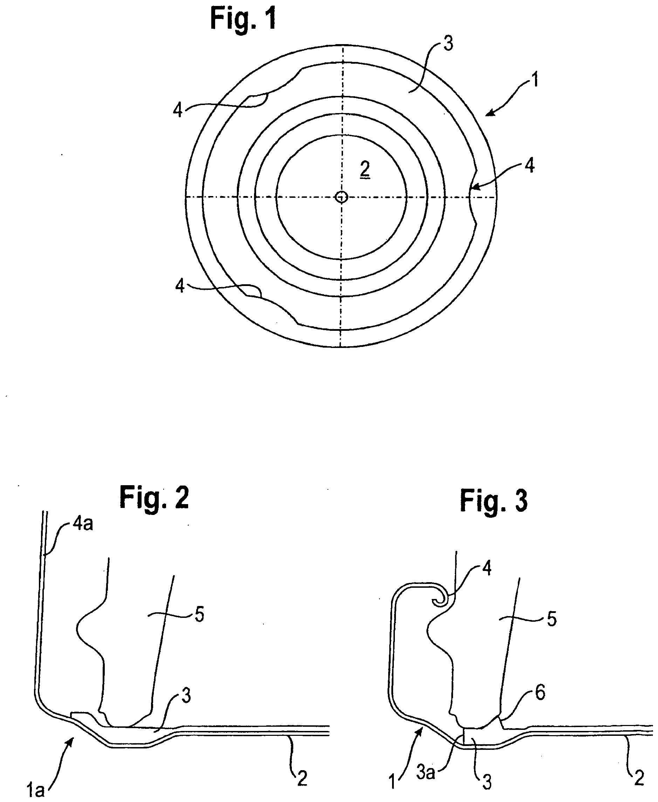

Figur 1 zeigt eine Aufsicht auf die Innenseite eines typischen herkömmlichen Nockendrehverschlusses (1).

Der Nockendrehverschluss (1) hat einen etwa planaren Innenbereich (2), der bei Verwendung des Verschlusses zum Innenraum des verschlossenen Gefäßes hin freiliegt und in Berührung mit dem Inhalt des Gefäßes kommen kann. Im hier gezeigten Ausführungsbeispiel erstreckt sich ein Dichtungselement (3) (dunkel gefärbt) nicht über die gesamte Innenfläche des Gefäßverschlusses (1), sondern ringförmig nur in dem äußeren Bereich des Verschlusses, der bei Verwendung des Verschlusses in Kontakt mit der Mündung des zu verschließenden Gefäßes steht. Bei einem typischen Nockendrehverschluss ist dies der "Kanalbereich", der auswärts über den Innenbereich (2) des Verschlusses vorsteht und daher auf der Innenseite eine Vertiefung bildet, in der das Dichtungselement (3) liegt. In diesen "Kanal" wird bei der herkömmlichen Herstellung das PVC-Plastisol eingespritzt, während der Verschlussrohling gedreht wird. Nachfolgend wird der Verschluss im Ofen nachbehandelt.

Der Nockendrehverschluss (1) hat insgesamt im Ausführungsbeispiel der Figur 1 drei Nocken (4), die beim Verschließen des Gefäßes in Eingriff mit dem entsprechenden Schraubgewinde treten und den Deckel so dichtend auf die Mündung des Gefäßes ziehen.

Wie Figur 1 unschwer erkennen lässt, verdecken die Nocken (4) das Dichtungselement (3), beim Blick auf die Innenseite des Verschlusses (1) teilweise.

Entsprechend würden sie die Einbringung eines Stempels stören, mit dem das Dichtungselement (3) ausgebildet werden könnte - und zwar unabhängig davon, ob dieses Dichtungselement (3) wie gezeigt ringförmig oder stattdessen kreisscheibenförmig ist (in welchem Fall es auch den Innenbereich (2) überdecken würde).

Die Erfindung schlägt zwei Alternativen vor, um auch für einen Nockendrehverschluss ein Dichtungselement mittels Extrusion und nachfolgender Stempelung ausbilden zu können.

Bei der in Figur 2 gezeigten ersten Ausführungsform ist ein Längsschnitt durch einen Verschluss-Rohling (1a) zu sehen, der den Bereich vollständig zeigt, aus dem später die seitliche Wandung (4a) des Verschlusses einschließlich der Nocken geformt wird; darüber hinaus ist der "Kanalbereich" gezeigt und ein Teil der Innenfläche (2) etwa bis zur Mitte des Rohlings.

Bei dieser Ausführungsform wird das Dichtungselement ausgebildet, bevor der Wandbereich (4a) des Rohlings unter Ausbildung der Nocken verformt wird.

Wie Figur 2 zeigt, kann bei dieser Ausführungsform ein übliches Dichtungselement (3) durch entsprechende Extrusion und Stempelung ausgebildet werden, das sich über den Innenbereich (2) und in den Kanalbereich sowie über diesen hinaus erstreckt, so dass es einen ringförmigen Bereich ausbilden kann, der später mit der Mündung des angedeuteten Gefäßes (5) dichtend zusammenwirken kann.

Bei dieser Ausführungsform wird nach der vollständigen Ausbildung des Dichtungselementes (3) ein weiterer Bearbeitungsschritt vorgenommen, bei dem der Wandbereich (4a) des Rohlings abwärts und einwärts unter Ausbildung der in Figur 1 erkennbaren Struktur mit den Nocken (4) ausgeformt wird.

Eine Alternative hierzu ist die zweite Ausführungsform, die in Figur 3 beschrieben wird.

Figur 3 zeigt etwa die gleichen Elemente des Verschlusses wie Figur 2, nur handelt es sich hier um die Ausbildung eines Dichtungselementes, nach dem der Verschluss (1) schon inklusive der Nocken (4) ausgeformt worden ist.

Da die Nocken (4) die Einbringung eines Stempels verhindern, der eine Formgebung des Dichtungselementes (3) wie in Figur 2 ermöglichen würde, wird bei dieser Ausführungsform das Dichtungselement nur im Innenbereich (2) und bis in den Kanal hinein ausgebildet. Wie Figur 3 erkennen lässt, endet das Dichtungselement (3) noch im Kanalbereich mit einer Außenkante (3a).

Um dennoch eine gute Dichtung gegenüber der Mündung des Gefäßes (5) zu ermöglichen, ist hier durch entsprechende Formgebung beim Stempeln eine Lippe (6) am Dichtungselement (3) vorgesehen. Da dieser Bereich des Dichtungselementes auch trotz des Vorhandenseins der Nocken (4) beim Stempeln zugänglich ist, ist diese Formgebung unproblematisch; sie minimiert, im Vergleich mit der ersten schon beschriebenen Ausführungsform gemäß Figur 2, den Einfluss auf die Prozesskette zur Ausbildung der Nockenstruktur.

Für die Realisierung der Erfindung eignen sich Polymer-Compounds der im Anspruch 1 genannten Art.

Für den jeweiligen konkreten Verwendungszweck kann das Compound hinsichtlich Shore-Härte, Elastizitätsmodul, rheologischen Eigenschaften und dergleichen durch im Stand der Technik bekannte Maßnahmen eingestellt werden.

Es ist möglich, die erfindungsgemäßen Dichtungseinlagen mit im Prinzip bekannten Maßnahmen auszustatten, die eine Barrierewirkung gegenüber Sauerstoff und Geschmackschädlingen wie Trichloranisol bewirken. Ebenso lassen sich die erfindungsgemäßen Dichtungselemente, wiederum analog bekannter Maßnahmen, mit den gewünschten Druckhaltungs- bzw. Überdruckventileigenschaften versehen.

Vorteilhaft werden die erfindungsgemäßen Gefäßverschlüsse so ausgestattet, dass sie eine Vakuumretention der Art zeigen, wie sie gegenwärtig von bekannten Verschlüssen bereitgestellt wird.

Die erwünschte Vakuumretention ist grundsätzlich das Ausmaß, in dem ein anfänglich vorgegebenes Vakuum im nicht befüllten Teil des verschlossenen Gefäßes auch nach der Pasteurisation bzw. Sterilisation und der Dauer der nachfolgenden Mindest-Lagerungsfähigkeit des Produktes noch besteht. Zum Beispiel kann verlangt sein, dass in einem verschlossenen Glasbehälter, der ein Lebensmittel enthält, ein anfänglicher Innendruck von weniger als 0,2 bar besteht, und bis zum Ende der Mindest-Lagerungsfähigkeit (Mindest-Haltbarkeitsdauer) der Innendruck nicht größer als 0,2 bar wird.

Typischerweise misst man die Vakuumretention, in dem nach dem Pasteurisieren oder Sterilisieren bei einer Stichprobe von Gefäßen der Deckel durchstochen und so der Innenraum mit einem Manometer verbunden wird. Der Innendruck wird abgelesen und aufgezeichnet. Bei einer anderen Stichprobe kann jetzt z. B. der Verlauf der Mindest-Haltbarkeitsdauer durch Behandlung mit Dampf bei erhöhter Temperatur simuliert werden ("accelerated ageing"). Danach wird der resultierende Innendruck, wie bei der ersten Stichprobe, gemessen. An dem Vergleich der Ergebnisse lässt sich erkennen, ob das Produkt den Anforderungen entspricht. Wenn bei einer zu großen Anzahl von Gefäßen der Stichproben der zulässige Innendruck überschritten wird, ist dies nicht der Fall.

Größere Gefäßverschlüsse der hier betrachteten Art sind Nockendrehverschlüsse, die typischerweise zum Verschluss von Schraubdeckelgläsern für Nahrungsmittel oder Getränke verwendet werden. Bei diesen Nahrungsmitteln handelt es sich oft um fetthaltige Produkte, z. B. Fertignahrung, Saucen, Feinkost, Antipasti, Gewürzpasten und dergleichen, deren Gehalt an Fetten bzw. Ölen die Gefahr erhöht, dass fettlösliche Bestandteile des Verpackungsmaterials sich im Nahrungsmittel lösen.

Diese Migration von Bestandteilen der Verpackung (zu der gegebenenfalls auch die Dichtungseinlage des Gefäßverschlusses gehört) in das Nahrungsmittel ist nicht nur generell unerwünscht, sondern auch durch gesetzliche Bestimmungen scharf reglementiert. Beispiele solcher Bestimmungen sind die EC-Direktiven 1935/2004, 2023/2006, 2002/72/EG und 372/2007.

Die Messung des Ausmaßes der gegebenenfalls beobachteten Migration erfolgt mittels Verfahren, wie sie insbesondere in der DIN EN 1186 definiert sind. Solche Verfahren finden auch im Kontext der vorliegenden Erfindung Anwendung.
Es ist kein triviales Problem, Gefäßverschlüsse der hier betrachteten Art mit PVC-freien Dichtungseinlagen zu versehen, wenn diese Verschlüsse den genannten Bestimmungen hinsichtlich der eventuellen Migration ihrer chemischen Bestandteile entsprechen müssen.

Bei einer Pasteurisierung und Heißfüllung werden Temperaturen unterhalb 100°C eingesetzt. Typische Sterilisierungsbedingungen sind 121°C oder sogar 132°C. Die erfindungsgemäß zu verwendenden Polymermaterialien sind so maßgeschneidert, dass sie einerseits für die Pasteurisierung oder Heißfüllung geeignet sind und andererseits unter den höheren Temperaturen der Sterilisierung ihre Dichtungswirkung im nötigen Umfang beibehalten.

Außerdem müssen die Dichtungen den oben genannten Anforderungen hinsichtlich der eventuellen Migration chemischer Bestandteile entsprechen.

Die vorbekannten Compounds lassen sich jedoch oft nicht zu größeren Dichtungseinlagen verarbeiten, weil ihre Fließeigenschaften dies verhindern.

Um die Verarbeitung herkömmlicher Compounds zu erleichtern, werden diesen üblicherweise Streckmittel und/oder Weichmacher zugesetzt. Insbesondere werden dafür bei Anwendungstemperatur flüssige Komponenten wie Strecköle (vorzugsweise Weißöl) verwendet.

Es hat sich nun überraschend gezeigt, dass sich solche Compounds zwar, gegebenenfalls nach Modifikation der Rezeptur, auch zu Dichtungseinlagen mit größeren Durchmessern verarbeiten lassen, dass die damit ausgestatteten Gefäßverschlüsse aber den gesetzlichen Bestimmungen hinsichtlich der Migration chemischer Bestandteile nicht immer genügen.

Es ist daher eine weitere wesentliche Aufgabe der Erfindung, eine zur Herstellung von Nockendrehverschlüssen der in Anspruch 1 eingangs definierten Art geeignete Dichtungseinlage anzugeben, welches es ermöglicht, den Gefäßverschluss mit einem Dichtungselement auf Polymerbasis zu versehen, welches kein PVC enthält und den gesetzlichen Vorschriften hinsichtlich der Migration von Verpackungskomponenten entspricht.

Solche Nockendrehverschlüsse eignen sich als Schraubdeckel für Flaschen, wie beispielsweise Saft- oder Milchflaschen, für Konservengläser, Marmeladengläser und dergleichen, und insbesondere für Schraubdeckelgläser für fetthaltige Nahrungsmittel wie Saucen, Gewürzpasten und dergleichen.

Spezifischer handelt es sich bei der Erfindung grundsätzlich um Gefäßverschlüsse aus Metall oder Kunststoff für Gefäße zur Aufnahme von Getränken oder Nahrungsmitteln, die vor der Migration von Verpackungsbestandteilen entsprechend den gesetzlichen Vorschriften geschützt werden müssen. Das sind beispielsweise ölhaltige oder fetthaltige Nahrungsmittel, wie beispielsweise Fertignahrung, insbesondere aber ölhaltige Saucen und Gewürzpasten, beispielsweise Currypaste. In den Öl- und Fettbestandteilen solcher Nahrungsmittel lösen sich Streckmittel wie Weißöl, aber auch Weichmacherbestandteile besonders leicht.

Um einen dichten Verschluss des Gefäßes zu gewährleisten, verfügen die erfindungsgemäßen Gefäßverschlüsse über eine Dichtungseinlage, die den weiter oben genannten Anforderungen hinsichtlich ihrer Verarbeitbarkeit einerseits, ihrer Dichtungseigenschaften andererseits entspricht und die auch die gesetzlichen Anforderungen hinsichtlich der Migration von Verpackungskomponenten erfüllt.

Um dies zu erreichen, ist das Material der Dichtungseinlage so gewählt, dass die Migration von Bestandteilen des Materials in das Getränk oder Nahrungsmittel verhindert wird.

Als Hauptbestandteil umfasst das Material der Dichtungseinlage ein PolymerCompound, das seine wesentliche Struktur bildet. Die Eigenschaften dieses Compounds können durch die Beimischung von Komponenten, beispielsweise weiterer Polymere, geeignet modifiziert werden.

Jedoch ist erfindungsgemäß vorgesehen, dass das Material der Dichtungseinlage nur sehr geringe Gehalte von Bestandteilen aufweist, die bei Anwendungstemperatur flüssig sind. Die Anwendungstemperatur ist üblicherweise gleich der Umgebungstemperatur, also im Bereich üblicher Umgebungstemperaturen im Freien bzw. in beheizten Räumen.

Erfindungsgemäß werden daher dem Material der Dichtungseinlage nur geringe oder vorzugsweise gar keine Gehalte an flüssigen Streckmitteln wie insbesondere Weißöl zugesetzt.

Erfindungsgemäß enthält das Material nicht mehr als 10 %, vorzugsweise nicht mehr als 7%, insbesondere nicht mehr als 4% und besonders bevorzugt nicht mehr als 1% solcher flüssigen Bestandteile.

Es ist gegenwärtig am meisten bevorzugt, dass das Material innerhalb der zum Anmeldungszeitpunkt gegebenen analytischen Bestimmungsgrenzen überhaupt keine bei Anwendungstemperatur flüssigen Bestandteile enthält.

Weiterhin wird es bevorzugt, dass das Material der Dichtungseinlage keine Weichmacher enthält.

Da sich Compounds für solche Dichtungseinlagen gegebenenfalls ohne Streckmittelzusatz nur schwer verarbeiten lassen, insbesondere wenn der Durchmesser des Gefäßverschlusses 2 cm überschreitet, wenn das Material etwa wie in EP 0 503 124 beschrieben, auf der Basis von styrolhaltigen Block-Copolymeren mit elastomeren Kettenabschnitten aufgebaut ist, werden gemäß der Erfindung vorzugsweise solche Materialien verwendet, die diese Polymere nicht enthalten.

Es ist daher bevorzugt, wenn das Material, aus dem die Dichtungseinlage geformt wird, weder die genannten flüssigen Streckmittel, noch Weichmacher, noch styrolhaltige Block-Copolymere mit elastomeren Kettenabschnitten enthält.

Erfindungsgemäß ist das Polymermaterial, das den Hauptbestandteil der Dichtungseinlage bildet, auf bestimmten Polyalkylenen aufbaut, die sich ohne Streckmittel und dergleichen auch zu Dichtungseinlagen für Gefäßverschlüsse mit Durchmessern von wenigstens 3,5 cm verarbeiten lassen.

Es hat sich herausgestellt, dass sich hierfür besonders gut das in Anspruch 1 definierte Copolymer eignet, das einerseits Polyethyleneinheiten umfasst, und andererseits aus einem Alken-Monomeren aufgebaut worden ist, welches aus Propen, Buten, Hexen und (insbesondere) Okten ausgewählt worden ist.

Solche Copolymere lassen sich mittels Metallocen-Katalysatoren gezielt mit den gewünschten physikalischen Eigenschaften erzeugen.

Erfindungsgemäß hat das genannte Material eine Shore A Härte von 40-90 und insbesondere eine Härte von 60-75. Der Druckverformungsrest bestimmt nach ASTM D 395 (70°C, 22h, 25% Kompression) liegt in einem Bereich von 30-70% und besonders bevorzugt zwischen 30 und 50%.

Geeignete Polymere sind in EP 0 714 426 beschrieben. Dort wird angegeben, dass sich diese Polymere als solche auch zu Dichtungseinlagen verarbeiten lassen, wobei keinerlei Zusätze erfolgen sollen (S. 2, Z. 26 - 28). Das Problem der Migration von Materialbestandteilen wird hier nicht angesprochen.

Eine beispielhafte Rezeptur umfasst:

| | |
|---|---|
| Ethylen-Okten-Copolymer mit den o.g. Eigenschaften: | 45% |
| EVA (14%VA): | 40% |
| Hochfließfähiges PP: | 14% |
| Stabilisatoren (IRGANOX 1010, IRGAFOS 168): | 0,2% |
| Gleitmittel (Erucasäureamid): | 0,2% |
| Gleitmittel (Ölsäureamid): | 0,2% |
| Pigment: | 0,4% |

Solche Materialien lassen sich mit dem in unserer parallelen internationalen Patentanmeldung (Titel "Verfahren zur Herstellung eines Gefäßverschlusses") beschriebenen Verfahren auch zu großen Dichtungselementen für entsprechend große Gefäßverschlüsse verarbeiten. Hierdurch wird es erstmalig möglich, beispielsweise Nockendrehverschlüsse mit Durchmessern von mehr als 60 mm mit einer Dichtungseinlage zu versehen, die den Bestimmungen der EC-Direktiven 1935/2004, 2023/2006, 2002/72/EG und 372/2007 entspricht.

Im Zusammenhang mit diesen gesetzlichen Vorschriften müssen Migrationstests erfolgen, die an den erfindungsgemäßen Gefäßverschlüssen in der Art und Weise durchgeführt werden, wie in der DIN EN 1186 beschrieben sind. Auf eine Wiedergabe dieser Messverfahren im Kontext der vorliegenden Anmeldung wird daher verzichtet; diese Tests werden durch Bezugnahme auf die DIN EN 1186 in den Offenbarungsgehalt der vorliegenden Anmeldung einbezogen.

Durch die Verwendung des genannten Polymermaterials wird erfindungsgemäß erreicht, dass die solchermaßen hergestellte Dichtungseinlage nicht nur unproblematisch hergestellt werden kann und die Dichtungseigenschaften aufweist, die eingangs beschrieben worden sind. Darüber hinaus sind solche Gefäßverschlüsse auch nicht nur pasteurisierbar, sondern auch sterilisierbar, und sie erfüllen die genannten europarechtlichen Vorschriften hinsichtlich der Migration von Bestandteilen des Polymermaterials in das Getränk oder Nahrungsmittel, das im erfindungsgemäß verschlossenen Gefäß enthalten ist.

Insoweit bilden die Vorschriften der genannten europarechtlichen Direktiven, insbesondere im Zusammenhang mit den Testkriterien der DIN EN 1186, geeignete Auswahlkriterien für das Polymermaterial, das sich aus der Vielzahl grundsätzlich denkbarer Compounds durch Verzicht auf bei Anwendungstemperatur flüssige Bestandteile und nachfolgendes Testen auffinden lässt.

## Patentansprüche

1. Verfahren zur Herstellung eines Gefäßverschlusses für Gefäße mit einer durch den Gefäßverschluss zu verschließenden Öffnung mit einem Innendurchmesser von mindestens 3,5 cm, der ein PVC-freies Dichtungselement auf Polymerbasis umfasst, welches im Gefäßverschluss so angeordnet ist, dass es im Schließzustand dichtend an der Öffnung des Gefäßes anliegt, bei dem ein Polymercompound durch Erwärmung ausreichend fließfähig gemacht und im Bereich des zu erzeugenden Dichtungselementes auf den Gefäßverschluss aufgetragen sowie mechanisch in die gewünschte Form gebracht wird, die es nach Erkalten beibehält,
**dadurch gekennzeichnet, dass** der Gefäßverschluss ein Nockendrehverschluss ist;
dass das Polymercompound nicht mehr als 10% von bei Anwendungstemperatur flüssigen Bestandteilen, insbesondere Weißöl, enthält;
dass die Shore A Härte des Polymercompounds zwischen 40 und 90 liegt;
das Polymercompound ein Copolymer enthält, das einerseits Polyethyleneinheiten umfasst und andererseits aus einem Alken-Monomeren aufgebaut ist, welches aus Propen, Buten, Hexen und insbesondere Octen ausgewählt ist, und
das Polymercompound beim Druckverformungstest bestimmt nach ASTM nach 22 Stunden Lagerung bei 70°C und einer Kompression von 25% einen Druckverformungsrest zwischen 30 % und 70% aufweist.

2. Verfahren nach Anspruch 1, **dadurch gekennzeichnet, dass** das Polymercompound eine Shore A Härte von 60-75 hat.

3. Verfahren nach einem der Ansprüche 1 oder 2, **dadurch gekennzeichnet, dass** das Polymercompound nicht mehr als 7 %, insbesondere nicht mehr als 4 % und besonders bevorzugt nicht mehr als 1 % von bei Anwendungstemperatur flüssigen Bestandteilen, insbesondere Weißöl, enthält.

4. Verfahren nach Anspruch 3, bei dem das Copolymer mittels Metallocen-Katalysatoren erzeugt worden ist.

5. Verfahren nach einem der vorstehenden Ansprüche, **dadurch gekennzeichnet, dass** das Polymercompound so ausgebildet ist, dass das Dichtungselement unter Pasteurisationsbedingungen (bei bis zu 98°C) einsetzbar ist.

6. Verfahren nach einem der vorstehenden Ansprüche, **dadurch gekennzeichnet, dass** das Polymercompound so ausgebildet ist, dass das Dichtungselement unter Sterilisierungsbedingungen (oberhalb 98 °C, spezieller ab 121 °C, vorzugsweise bei 132 °C) einsetzbar ist.

7. Verfahren nach einem der vorstehenden Ansprüche, **dadurch gekennzeichnet, dass** der Gefäßverschluss im Schließzustand eine Gas-Barrierewirkung und/oder eine Überdruckventilwirkung aufweist.

8. Verfahren nach einem der vorstehenden Ansprüche, **dadurch gekennzeichnet, dass** der Gefäßverschluss im Schließzustand eine Vakuumsretention zeigt.

9. Verfahren nach einem der vorstehenden Ansprüche, bei dem das Polymermaterial als Granulat bereitgestellt und mittels eines Extruders erwärmt wird.

10. Verfahren nach Anspruch 9, bei dem das fließfähige Polymermaterial aus einer Düse innenseitig auf den Gefäßverschluss aufgetragen wird.

11. Verfahren nach Anspruch 9 oder Anspruch 10, bei dem das aufgetragene Polymermaterial mittels eines Stempels oder dergleichen geformt wird.

12. Verfahren nach Anspruch 1, **dadurch gekennzeichnet, dass** der Gefäßverschluss einem Innendurchmesser der Gefäßöffnung von mindestens 4 cm entspricht.

13. Verfahren nach einem der vorstehenden Ansprüche, **dadurch gekennzeichnet, dass** das Polymercompound innenseitig auf einem Gefäßverschluss-Rohling aus Metall aufgetragen wird.

## Claims

1. Method of producing a vessel closure for vessels with an opening, to be closed by said vessel closure, with an inner diameter of at least 3.5 cm, said vessel closure comprising a sealing element based on polymers, which is free of PVC and arranged in the vessel closure so that it sealingly abuts the opening of the vessel in the closed state, wherein a polymer compound is made sufficiently flowable by warming and is provided to the vessel closure in the area of the sealing element to be formed and is mechanically brought into the desired shape which it retains after cooling;
**characterized in that** the vessel closure is a lug cap;
that the polymer compound does not comprise more than 10% of components which are liquid at application temperature, especially white oil;
that the shore A hardness of the polymer compound is between 40 and 90;
that the polymer compound comprises a copolymer which on the one hand comprises polyethylene units and on the other hand is built from an alkene monomer selected from propene, butane, hexane and especially octane, and
the polymer compound has a compression set between 30 % and 70 %, determined in accordance with ASTM at 22 h storage at 70°C and a compression of 25 %.

2. The method of claim 1 **characterized in that** the polymer compound has a Shore A hardness of 60 to 75.

3. The method of claims 1 or 2, **characterized in that** the polymer compound does not comprise more than 7 %, specifically not more than 4 % and especially preferred not more than 1 % of components which are liquid at application temperature, especially oil.

4. The method of claim 3, wherein the copolymer has been produced by metallocene catalysts.

5. The method of any one of the preceding claims, **characterized in that** the polymer compound is embodied such that the sealing element is usable under conditions of pasteurization (at up to 98°C).

6. The method of any one of the preceding claims, **characterized in that** the polymer compound is embodied such that the sealing element is usable under conditions of sterilization (above 98°C, more specifically from 121°C, and preferably at 132°C).

7. The method of any one of the preceding claims, **characterized in that** the vessel closure provides a gas barrier function and/or a safety valve function, in the closed state.

8. The method of any one of the preceding claims, **characterized in that** the vessel closure provides vacuum retention, in the closed state.

9. The method of any one of the preceding claims, wherein the polymer material is provided as a granulate and is warmed by means of an extruder.

10. The method of claim 9, wherein the flowable polymer material is applied to the interior of the vessel closure by means of a nozzle.

11. The method of claim 9 or claim 10, wherein the polymer material is shaped after application by means of a stamp or such.

12. The method of claim 1, **characterized in that** the vessel closure corresponds to an inner diameter of the vessel opening of at least 4 cm.

13. The method of any one of the preceding claims, **characterized in that** the polymer compound is applied to the interior of a vessel closure precursor made of metal.

## Revendications

1. Procédé de fabrication d'une fermeture de récipient pour des récipients avec une ouverture, à obturer par la fermeture, d'un diamètre intérieur d'au moins 3,5 cm, laquelle fermeture comprend un élément d'étanchéité exempt de PVC à base de polymère, disposé dans la fermeture du récipient de sorte que, dans l'état de fermeture, il s'applique hermétiquement sur l'ouverture du récipient, pour laquelle un composé polymère est rendu suffisamment fluide par chauffage et est appliqué sur la fermeture du récipient dans la zone de l'élément d'étanchéité à produire, ainsi qu'amené mécaniquement dans la forme souhaitée, qu'il conserve après le refroidissement,
**caractérisé en ce que** la fermeture de récipient est une fermeture tournante à cames ;
**que** le composé polymère ne renferme pas plus de 10% de constituants liquides à la température d'utilisation, en particulier de l'huile blanche ;
**que** la dureté Shore A du composé polymère se situe entre 40 et 90 ;
le composé polymère renferme un copolymère, qui comprend d'un côté des unités de polyéthylène, et est basé de l'autre côté sur un monomère d'alcène, sélectionné parmi le propène, le butène, l'hexène et en particulier l'octène, et
le composé polymère, lors de l'essai de déformation sous pression défini selon ASTM, après 22 heures de stockage à 70°C et sous une compression de 25%, présente une déformation résiduelle sous compression comprise entre 30% et 70%.

2. Procédé selon la revendication 1, **caractérisé en ce que** le composé polymère a une dureté Shore A de 60 - 75.

3. Procédé selon l'une des revendications 1 et 2, **caractérisé en ce que** le composé polymère ne renferme pas plus de 7%, en particulier pas plus de 4%, et de façon particulièrement préférentielle pas plus de 1%, de constituants liquides à la température d'utilisation, en particulier de l'huile blanche.

4. Procédé selon la revendication 3, dans lequel le copolymère a été produit au moyen de catalyseurs métallocènes.

5. Procédé selon l'une des revendications précédentes, **caractérisé en ce que** le composé polymère est fabriqué de sorte que l'élément d'étanchéité est utilisable dans des conditions de pasteurisation (à des températures jusqu'à 98°C).

6. Procédé selon l'une des revendications précédentes, **caractérisé en ce que** le composé polymère est fabriqué de sorte que l'élément d'étanchéité est utilisable dans des conditions de stérilisation (au-dessus de 98°C, spécialement à partir de 121°C, de préférence à 132°C).

7. Procédé selon l'une des revendications précédentes, **caractérisé en ce que** la fermeture de récipient présente, dans l'état de fermeture, un effet de barrière de gaz et/ou un effet de soupape de sûreté.

8. Procédé selon l'une des revendications précédentes, **caractérisé en ce que** la fermeture de récipient présente dans l'état de fermeture une rétention sous vide.

9. Procédé selon l'une des revendications précédentes, dans lequel le matériau polymère est préparé sous forme de granulat et chauffé au moyen d'une extrudeuse.

10. Procédé selon la revendication 9, dans lequel le matériau polymère fluide est appliqué du côté intérieur par une buse sur la fermeture de récipient.

11. Procédé selon la revendication 9 ou la revendication 10, dans lequel le matériau polymère appliqué est formé au moyen d'un poinçon ou analogue.

12. Procédé selon la revendication 1, **caractérisé en ce que** la fermeture de récipient correspond à un diamètre intérieur de l'ouverture du récipient d'au moins 4 cm.

13. Procédé selon l'une des revendications précédentes, **caractérisé en ce que** le composé polymère est appliqué du côté intérieur sur une ébauche de fermeture de récipient en métal.
